Europäisches Patentamt

European Patent Office

Office européen des brevets

(19)

(11) Publication number: **0 263 688 B1**

## EUROPEAN PATENT SPECIFICATION

(12)

(45) Date of publication of patent specification: 07.08.91

(51) Int. Cl.⁵: **B41J 19/14**, B41J 2/22, B41J 25/02, G06K 15/10

(21) Application number: 87308872.8

(22) Date of filing: 07.10.87

(54) **Method for correcting printing alignment of a serial dot matrix printer.**

(30) Priority: 09.10.86 JP 239218/86

(43) Date of publication of application:
13.04.88 Bulletin 88/15

(45) Publication of the grant of the patent:
07.08.91 Bulletin 91/32

(84) Designated Contracting States:
DE FR GB

(56) References cited:
EP-A- 0 077 465
EP-A- 0 141 243

(73) Proprietor: **Oki Electric Industry Company, Limited**
**7-12, Toranomon 1-chome Minato-ku**
**Tokyo 105(JP)**

(72) Inventor: **Tanuma, Jiro**
**Oki Electric industry Co. Ltd.**
**7-12 Toranomon 1-chome Minatoku**
**Tokyo(JP)**
Inventor: **Hayashi, Kuniharu**
**Oki Electric industry Co. Ltd.**
**7-12 Toranomon 1-chome Minatoku**
**Tokyo(JP)**
Inventor: **Katakura, Shinichi**
**Oki Electric industry Co. Ltd.**
**7-12 Toranomon 1-chome Minatoku**
**Tokyo(JP)**
Inventor: **Sakaino, Hiroshi**
**Oki Electric industry Co. Ltd.**
**7-12 Toranomon 1-chome Minatoku**
**Tokyo(JP)**

(74) Representative: **SERJEANTS**
**25, The Crescent King Street**
**Leicester, LE1 6RX(GB)**

## Description

### Field of invention

This invention relates to a method for correcting the bidirectional printing alignment of a serial dot matrix printer and a printer adapted to perform such a method.

### Background of invention

A serial dot matrix printer prints on a medium by means of a print head that moves laterally and stops in a cyclical manner. Known causes of misalignment of the printed pattern in bidirectional printing (i.e. misalignment between positions of printing during lateral movement in one direction and during lateral movement in the other direction) include variations in the backlash of the gears in the drive mechanism, variations in the speed of motion of the carriage due to nonuniformity of parts, an example being variation in rack pitch, and variations in the acceleration and deceleration time of the carriage motor (space motor) due to variations in the characteristics of circuit elements.

A system that has been adapted to correct such misalignment is to change the read-only memory date with regard to printing timing, as disclosed in Japanese Patent Application Laying-opn No. 45070/1982. However print misalignment could still occur.

### Summary of Invention

The invention provides a method of operation of a serial dot matrix printer having a bidirectionally movable print head comprising storing in a memory device a set of correction amounts ($\Delta t_4$) for bidirectionally correcting the alignment of print positions reading from the memory device and successively printing out the correction amounts ($\Delta t_4$), operating a switch when an appropriate correction amount ($\Delta t_4$) is printed to write that correction amount ($\Delta t_4$) to a rewritable memory device that has a battery as a back-up power source and printing using the correction amount ($\Delta t_4$) written to the memory device.

A method involving the storage in a RAM of reference value including correction for controlling the speed of movement of bidirectionally movable print head is disclosed in EP-A-0077465. EP-A-0141243 discloses a similar method in which a correction amount is selected and written from a ROM to a RAM, and the correction amount is used for compensating for speed variations in the operation of a print mechanism.

Printers may be set individually to provide correct alignment using different correction amounts, making accuracy of mechanical and electronic component (register) tolerances less critical. Printers can be re-adjusted during their lifetime to re-establish correct alignment should it be lost. No read-only memories need to be exchanged nor is it necessary for a supply of ROM's with different correction values to be stored for possible use in correcting print settings.

The above method enables correctly-aligned printing to be obtained through switch operations for making selection among correction amounts stored in the memory, and the correction amount that is considered appropriate is selected for use in correction of the alignment. Misalignment may be caused by dimensional variations, variations in print-head characteristics, variations in circuit elements, and aging changes. Misalignment due to dimensional variations, variations in print-head characteristics, and circuit element variations are corrected in this way when the printer is first assembled. Misalignment arising from aging changes is corrected by reselecting the correction amount when the misalignment problem occurs.

### Drawings

Figure 1 is a block diagram showing a first embodiment of the invention;

Figure 2 is a block diagram showing an example of the correction section shown in Figure 1;

Figure 3 is a partly cut away oblique view of the print-head assembly;

Figure 4 is a block diagram showing part of an example of a forward print trigger generator;

Figure 5 is a timing chart showing clock pulse counting and the output of a trigger signal;

Figure 6 is a block diagram showing an example of decimating circuit;

Figure 7 is a block diagram showing a hardware construction of the control system of the printer;

Figure 8 is a flow chart showing the operations for the setting, particularly of the correction amount;

Figure 9 is an example of print produced during the setting of the correction amount; and

Figure 10 is a block diagram showing a situation where aging changes must be considered.

### Detailed description of embodiments

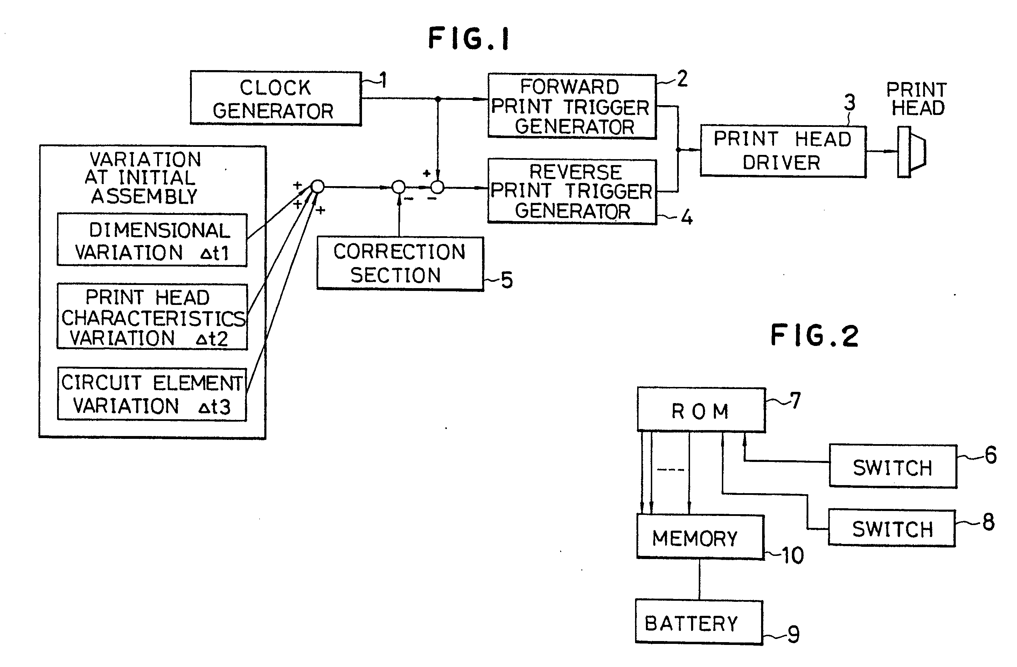

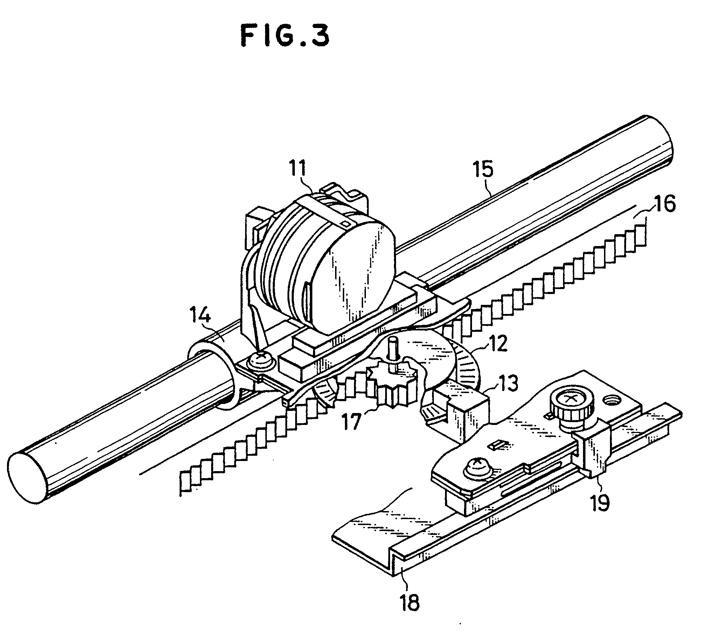

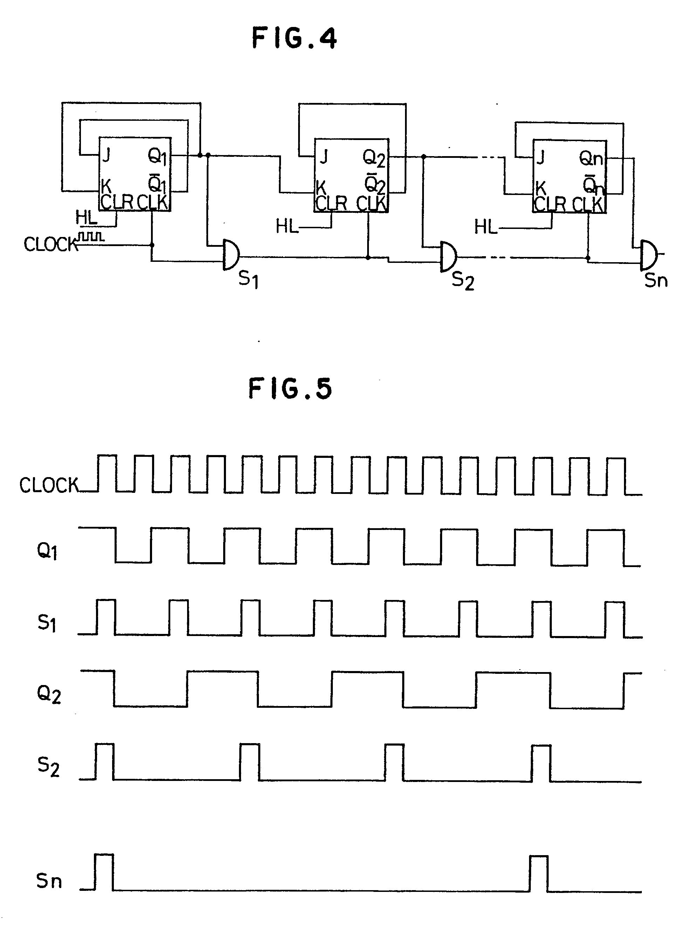

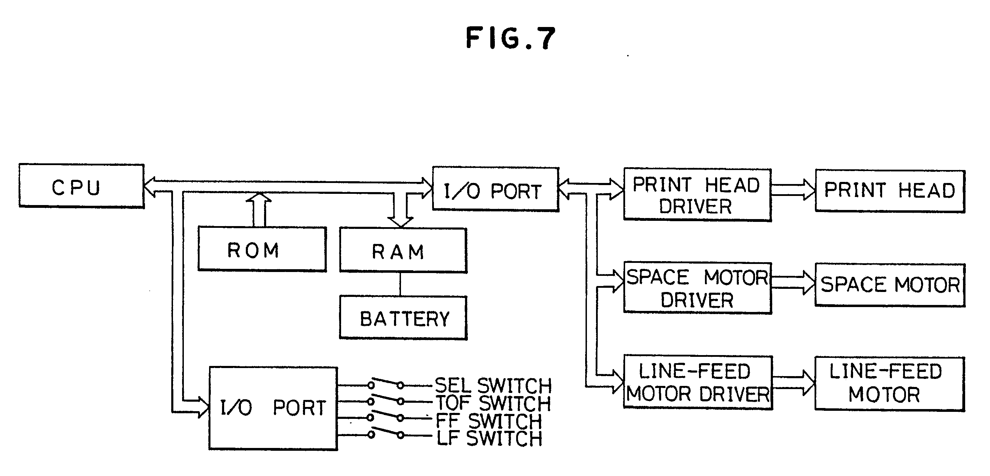

Figure 1 is a block diagram of a first embodiment. In forward printing, first a clock signal shown in Figure 5 is generated by a clock generator 12. The clock generator 1 can be any device that operates through the lateral motion of the print head. It may be, for example, an encoder 12 and photosensor 13 detecting rotation of a space motor (shown in Figure 7) for moving the print head 11 laterally. The motor and associated parts are shown in oblique view in Figure 3, and include a carriage frame 14, a carriage shaft 15, a space rack 16, a motor gear 17, a baseplate 18 and a slider 19.

The clock signal is next fed to a forward printer trigger generator 2, which outputs a print trigger signal at a given timing. This forward print trigger generator 2 can be any device that counts clock pulses and generates at trigger signal at every predetermined count. For example, it can be a combination of flip-flop gates and AND gates as shown in Figure 4. The print trigger signal is applied to a print-head driver 3 comprising resistors, capacitors, transistors, and other elements to carry out the printing operation. In reverse printing, the clock signal is fed to a reverse print trigger generator 4, which outputs a print trigger signal at a given timing. The reverse print trigger generator can be any device capable of altering the lock count from the stopped position to the first trigger position by a correction value $\Delta t_4$ that is supplied from a correction section 5. For instance, the reverse print trigger generator 4 comprises a combination of the flip-flop gates and AND gates similar to that shown in Figure 4 and a decimating circuit connected at the input of the above combination. The decimating circuit decimates the pulses from the clock generator 1 at the start of lateral movement so that the number of pulses the clock generator 1 must produce before the first trigger is made is altered depending on the number of pulses decimated which in turn is dependent on the correction amount.

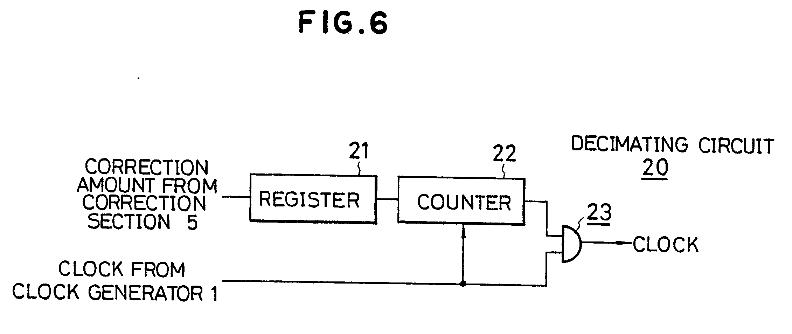

An example of the decimating circuit 20 is schematically shown in Figure 6. As illustrated it comprises a register 21 in which the correction amount (or a number of pulses corresponding to the correction amount) is fed from the correction section 5 and stored. A counter 22 counts the clock signal from the clock generator 1 and produces a low-level signal until the number of pulses fed from the clock generator reaches the value as stored in the register 21, after which an AND gate 23 is opened. The output of the AND gate is applied to the combination of flip-flop and AND gates similar to that shown in Figure 4. The correction value $\Delta t_4$ must conform to the sum of the amounts of misalignment due to various factors. Figure 1 assumes a situation where the misalignment are due to the following factors:

$\Delta t_1$: the reverse printing misalignment, measured in seconds, caused by dimensional variations, for example by variations in the gap, which causes differences in the time taken for the wires to reach the platen.

$\Delta t_2$: the misalignment, measured in seconds, caused by variations in print-head characteristics, for example by variations in the time required to release the wires, due to differences in attractive magnetic force.

$\Delta t_3$: the misalignment, measured in seconds, caused by variations in circuit elements, for example variations in the values of resistors which cause variations in drive time. The sum ($\Delta t_1$ + $\Delta t_2$ + $\Delta t_3$) is the misalignment that arises in the forward direction, measured in seconds.

A correction amount of $\Delta t_4 = -(\Delta t_1 + \Delta t_2 + \Delta t_3)$ seconds should therefore be added by the correction section 5. The correction section 5 can be configured as shown in the block diagram in Figure 2. When a switch 6 is pressed correction amounts stored in a read-only memory 7 are read and printed one by one on a sheet which is then fed (line-fed) out so that the printed part can be seen by the operator immediately after the printing. When the desired correction amount, or the correction amount that is considered most appropriate is printed, another switch 8 is pressed to write the selected correction amount in a battery-back-up memory 10 (substituting any previously stored correction amount).

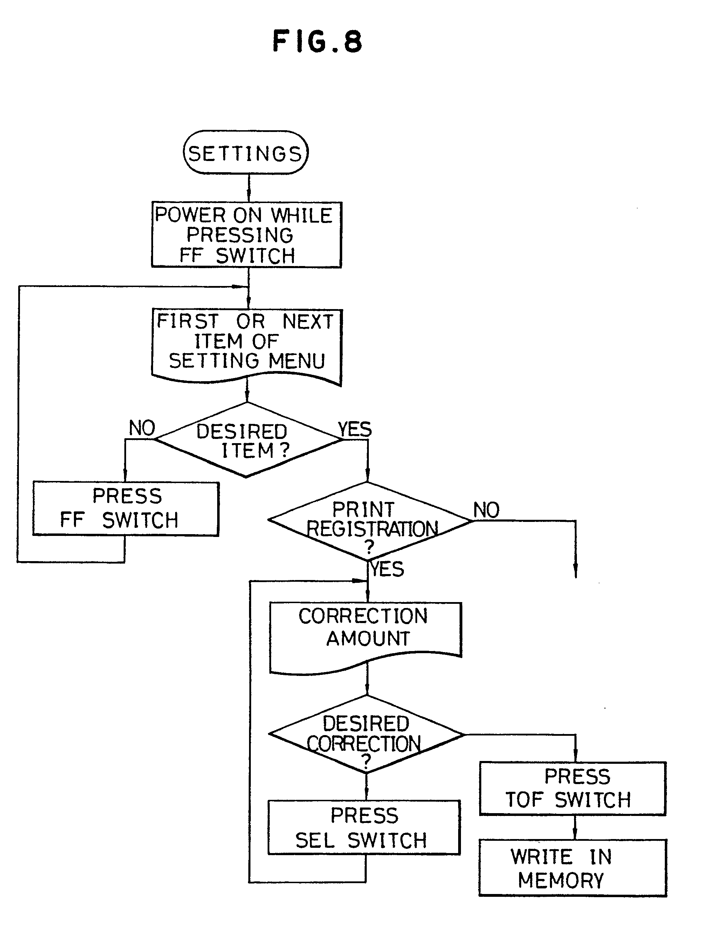

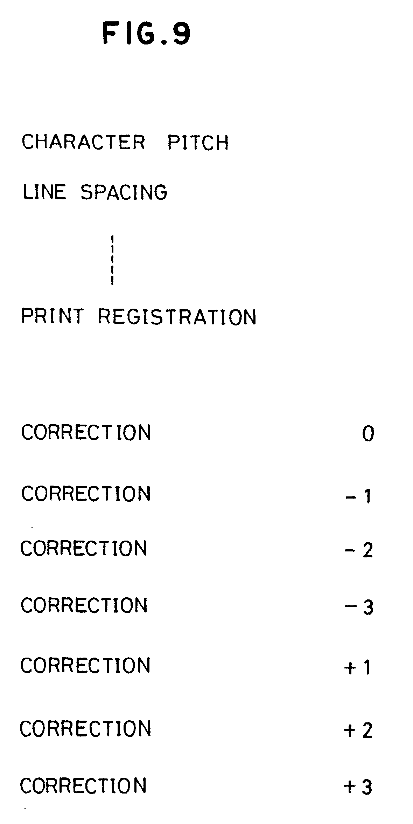

Figure 7 shows a hardware configuration of the control system of the printer. ROM stores programs as well as a table of correction amounts and other fixed data that are used for control of the printer. RAM is backed up by a battery and stores the correction amount that has been considered most appropriate. The print-head driver, the space motor driver and a line-feed motor driver are connected via an I/O port. Several switches including SEL switch, TOF switch, FF switch and LF switch are also connected via an I/O port. The CPU operates under control of the programs stored in the ROM and in accordance with data derived from the switches as well as sensors, not shown, in various parts of the printers. Figure 8 shows operations of the CPU when various settings are made. Figure 9 shows an example of printouts that are made in the course of the setting procedure. In this example, the setting (or rewriting) of the correction amount is performed in part of a program that also governs setting of character pitch, line spacing, etc. Moreover, the switches used for the settings are the ones that are also used for ( and they are primarily intended for) other purposes.

To start operation in the setting mode the FF (form feed) switch is pressed and the POW ON (power on) switch is also manipulated while the FF switch is kept pressed. Then items of the setting menu are printed in turn. When the item of the setting menu that has just been printed is not the one that is wanted, the FF switch (alone this time) is pressed. Then the next item of the setting menu is printed. If the item of the setting menu is the one that is desired, then the operations for setting that item is entered by manipulation of an appropriate switch. In Figure 9 it is assumed that the process of pressing the FF switch for printing the next item of the setting menu is repeated until the message PRINT REGISTRATION is printed. When the operation for selecting the correction amount is started, correction amounts are printed in turn. If the correction amount that has just been printed is to be selected, TOF (top of form) switch is pressed. If the correction amount that has just been printed is not to be selected, the SEL (select) switch is pressed so that next correction amount is printed. To see whether the alignment is correct, a test pattern such as a series of characters "H" are printed in one direction and then in the other. Comparison of the printed characters one above another will show any misalignment and desired correction. The correction amount is applied to the reverse print trigger generator to alter the number of clock pulses that must be applied before the first trigger signal is produced during backward travel of the print-head.

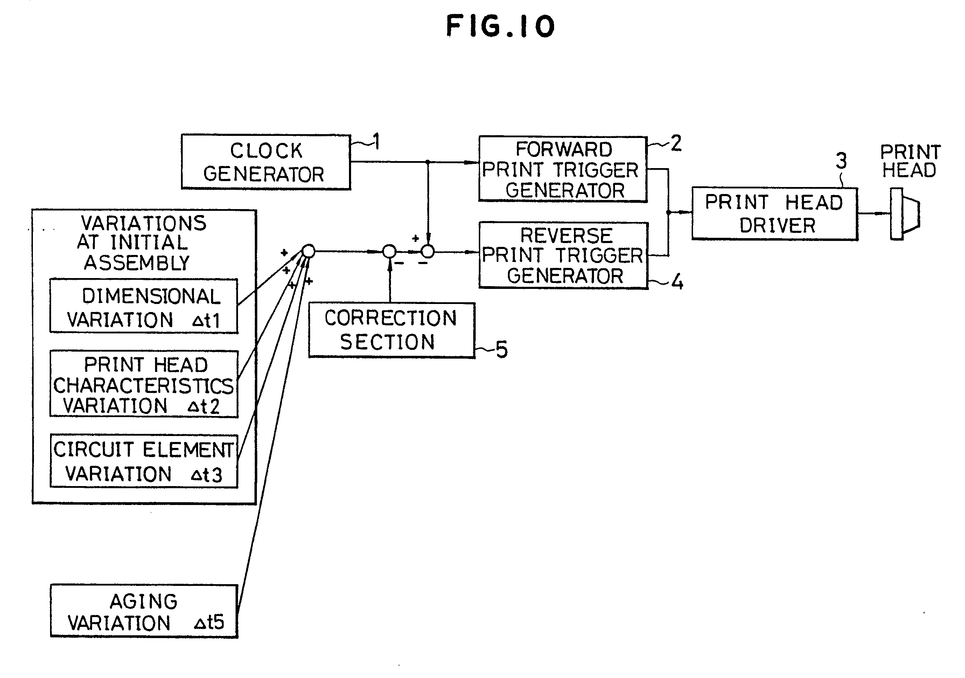

The correction amount selected in this way and the clock signal from the clock generator 1 are fed to the reverse print trigger generator 4 to generate a trigger signal at a timing that will not give rise to misalignment. Thus the print head is driven to produce correctly aligned printing. The memory 10 that holds the correction $t_4$ applied to the reverse print trigger generator 4 is backed up by a battery 9, so the selected correction amount is retained even after power is switched off. It is not necessary to reset the correction amount each time power is turned off and on. Figure 10 shows a situation where there is an additional factor that also causes misalignment, that is aging variation $\Delta t_5$, measured in seconds. This may for example be due to wear of mechanical parts. When there occurs such a change during the life of the unit, the correction amount can be rewritten in the same manner as described above. In this situation, the correction amount $\Delta t_4$ should conform to the sum of $\Delta t_1$ to $\Delta t_3$ and $\Delta t_5$, i.e.,

$$\Delta t_4 = - (\Delta t_1 + \Delta t_2 + \Delta t_3 + \Delta t_5)$$

As explained in the foregoing description, this invention provides a table of bidirectional printing misalignment correction amounts written in a read-only memory, which can be read out by a switch operation. At a correction amount that is considered appropriate, another switch can be pressed to select this correction amount and write the selection correction amount into a rewritable battery-backed-up memory to correct the bidirectional printing alignment. This arrangement simplifies both the setting of the alignment correction amount during initial assembly and the resetting of the alignment correction amount if required due to aging changes after the printer is in the possession of the user. Since the correction amount is stored in a battery-backed-up memory, the selected correction amount is retained after power is switched off and remains in effect at all times. The correction amount need only apply to one direction of print head travel so that alignment with characters printed in the other direction of print travel can be achieved.

## Claims

1. A method of operation of a serial dot matrix printer having a bidirectionally movable print head (11) comprising storing in a memory device (7) a set of correction amounts ($\Delta t_4$) for bidirectionally correcting the alignment of print positions, CHARACTERISED BY reading from the memory device (7) and successively printing out the correction amounts ($\Delta t_4$), operating a switch (8) when an appropriate correction amount ($\Delta t_4$) is printed to write that correction amount ($\Delta t_4$) to a rewritable memory device (10) that has a battery (9) as a back-up power source, and printing using the correction amount ($\Delta t_4$) written to the memory device (10).

2. A method according to claim 1 further comprising veryifying that the correction amount written into the memory device (10) is the appropriate correction amount ($\Delta t_4$) by printing a line of test characters in one direction and a line of test characters in the other direction, and comparing the two lines of test characters for misalignment.

3. A method according to claim 1 or claim 2 wherein printing comprises adjusting the timing of the printing in accordance with the correction amount ($\Delta t_4$).

4. A method according to any of claims 1 to 3 wherein the rewritable memory device (10) is a RAM.

5. A method according to any preceding claim wherein successively printing out the correction amounts ($\Delta t_4$) comprises printing out the correction amounts ($\Delta t_4$) each individually in response to the operation of a switch (6).

6. A method according to any preceding claim further comprising operating a power source control switch while operating another switch and then operating a further switch to enter a mode for the successive printing out of the

correction amounts ($\Delta t_4$) and writing the appropriate correction amount ($\Delta t_4$) to the rewritable memory device (10).

7. A method according to any preceding claim wherein the memory device (7) is a ROM.

## Revendications

1. Procédé d'actionnement d'une imprimante matricielle série ayant une tête d'impression mobile de façon bi-directionnelle (11) comportant la mémorisation dans un dispositif de mémoire (7) d'un ensemble de valeurs de correction ($\Delta t_4$) afin de corriger de façon bi-directionnelle l'alignement des positions d'impression, caractérisé par la lecture dans le dispositif de mémoire (7) et l'impression de manière successive des valeurs de correction ($\Delta t_4$), l'actionnement d'un contacteur (8) lorsqu'une valeur de correction appropriée ($\Delta t_4$) est imprimée afin d'écrire cette valeur de correction ($\Delta t_4$) dans un dispositif de mémoire réinscriptible (10) qui possède une batterie (9) comme source d'alimentation de sauvegarde, et l'impression en utilisant la valeur de correction ($\Delta t_4$) écrite dans le dispositif de mémoire (10).

2. Procédé selon la revendication 1, comportant en outre la vérification que la valeur de correction écrite dans le dispositif de mémoire (10) est la valeur de correction appropriée ($\Delta t_4$) en imprimant une ligne de caractères de test dans un sens et une ligne de caractères de test dans l'autre sens, et en comparant les deux lignes de caractères de test pour le défaut d'alignement.

3. Procédé selon la revendication 1 ou la revendication 2, dans lequel l'impression comprend le réglage de la synchronisation de l'impression en fonction de la valeur de correction ($\Delta t_4$).

4. Procédé selon l'une quelconque des revendications 1 à 3, dans lequel le dispositif de mémoire réinscriptible (10) est une mémoire vive.

5. Procédé selon l'une quelconque des revendications précédentes, dans lequel l'impression successive des valeurs de correction ($\Delta t_4$) comprend l'impression des valeurs de correction ($\Delta t_4$) de manière individuelle en réponse à l'actionnement d'un contacteur (6).

6. Procédé selon l'une quelconque des revendications précédentes, comportant en outre l'actionnement d'un contacteur de commande d'alimentation tout en actionnant l'autre contacteur et ensuite l'actionnement d'un autre contacteur afin d'entrer dans un mode d'impression successive des valeurs de correction ($\Delta t_4$) et d'écriture de la valeur de correction appropriée ($\Delta t_4$) dans le dispositif de mémoire réinscriptible (10).

7. Procédé selon l'une quelconque des revendications précédentes, dans lequel le dispositif de mémoire (7) est une mémoire morte.

## Patentansprüche

1. Verfahren zum Betrieb eines seriellen Matrixdruckers mit einem in zwei Richtungen beweglichen Druckkopf (11), das das Speichern von Korrekturbeträgen ($\Delta t_4$) zur Korrektur der Ausrichtung von Druckpositionen in zwei Richtungen in einer Speichereinrichtung (7) umfaßt, gekennzeichnet durch Auslesen der Korrekturbeträge ($\Delta t_4$) aus der Speichereinrichtung (7) und das Ausdrucken der Korrekturbeträge in Folge, Betätigen eines Schalters (8), wenn ein passender Korrekturbetrag ($\Delta t_4$) gedruckt wird, zum Einschreiben dieses Korrekturbetrages ($\Delta t_4$) in eine neu beschreibbare Speichereinrichtung (10) mit einer Batterie (9) als Zusatzstromquelle und Drucken unter Verwendung des in die Speichereinrichtung (10) eingeschriebenen Korrekturbetrages ($\Delta t_4$).

2. Verfahren nach Anspruch 1, das weiterhin das Prüfen, daß der in die Speichereinrichtung (10) eingeschriebene Korrekturbetrag der passende Korrekturbetrag ($\Delta t_4$) ist, durch Drucken einer Zeile von Testzeichen in einer Richtung und einer Zeile von Testzeichen in der anderen Richtung und Vergleichen der beiden Zeilen von Testzeichen auf Versatz umfaßt.

3. Verfahren nach Anspruch 1 oder 2, worin das Drucken das Anpassen des zeitlichen Ablaufs des Druckvorgangs entsprechend dem Korrekturbetrag ($\Delta t_4$) umfaßt.

4. Verfahren nach einem der Ansprüche 1 bis 3, worin die neu beschreibbare Speichereinrichtung (10) ein RAM ist.

5. Verfahren nach einem der vorhergehenden Ansprüche, worin das Ausdrucken der Korrekturbeträge ($\Delta t_4$) in Folge das jeweils einzelne Ausdrucken der Korrekturbeträge ($\Delta t_4$) auf die Betätigung eines Schalters (6) hin umfaßt.

6. Verfahren nach einem der vorhergehenden Ansprüche, das weiterhin das Betätigen eines Stromquellen-Steuerschalters während der Betätigung eines anderen Schalters und das anschließende Betätigen eines weiteren Schalters zum Eingeben eines Modus' zum Ausdrucken der Korrekturbeträge ($\Delta t_4$) in Folge und Einschreiben des passenden Korrekturbetrages ($\Delta t_4$) in die neu beschreibbare Speichereinrichtung (10) umfaßt.

7. Verfahren nach einem der vorhergehenden Ansprüche, worin die Speichereinrichtung (7) ein ROM ist.

# FIG.1

# FIG.2

EP 0 263 688 B1

# FIG.3

EP 0 263 688 B1

# FIG.4

# FIG.5

# FIG.6

CORRECTION
AMOUNT FROM
CORRECTION
SECTION 5

CLOCK FROM
CLOCK GENERATOR 1

REGISTER 21

COUNTER 22

DECIMATING CIRCUIT
20

23

CLOCK

EP 0 263 688 B1

# FIG.7

EP 0 263 688 B1

# FIG.8

```
                    ( SETTINGS )
                         │
                         ▼
              ┌──────────────────┐
              │  POWER ON WHILE  │
              │    PRESSING      │
              │    FF SWITCH     │
              └──────────────────┘
                         │
          ┌──────────────┤
          │              ▼
          │   ┌──────────────────┐
          │   │  FIRST OR NEXT   │
          │   │    ITEM OF       │
          │   │  SETTING MENU    │
          │   └──────────────────┘
          │              │
          │              ▼
          │      NO   ╱ DESIRED ╲  YES
          │      ┌───◄   ITEM ?  ►───┐
          │      │     ╲        ╱    │
          │      ▼                   ▼
          │  ┌─────────┐      ╱  PRINT  ╲   NO
          │  │  PRESS  │     ◄ REGISTRATION ►──┐
          └──│FF SWITCH│      ╲    ?    ╱      │
             └─────────┘         │YES          │
                        ┌────────┤             │
                        │        ▼             │
                        │  ┌──────────────┐    │
                        │  │  CORRECTION  │    │
                        │  │   AMOUNT     │    │
                        │  └──────────────┘    │
                        │        │             │
                        │        ▼             │
                        │   ╱ DESIRED ╲        │
                        │  ◄ CORRECTION ►──┐   │
                        │   ╲    ?    ╱    │   │
                        │        │        ▼   │
                        │        ▼   ┌─────────┐
                        │  ┌─────────┐│  PRESS  │
                        │  │  PRESS  ││TOF SWITCH│
                        └──│SEL SWITCH│└─────────┘
                           └─────────┘     │
                                           ▼
                                     ┌──────────┐
                                     │ WRITE IN │
                                     │  MEMORY  │
                                     └──────────┘
```

# FIG.9

CHARACTER  PITCH

LINE  SPACING

PRINT  REGISTRATION

| CORRECTION | 0 |
| CORRECTION | − 1 |
| CORRECTION | − 2 |
| CORRECTION | − 3 |
| CORRECTION | + 1 |
| CORRECTION | + 2 |
| CORRECTION | + 3 |

# FIG.10

EP 0 263 688 B1